Europäisches Patentamt

European Patent Office

Office européen des brevets

(19)

(11) Veröffentlichungsnummer: **0 243 770**
A1

(12) **EUROPÄISCHE PATENTANMELDUNG**

(21) Anmeldenummer: **87105442.5**

(22) Anmeldetag: **13.04.87**

(51) Int. Cl.³: **B 60 R 11/02**

(30) Priorität: **26.04.86 DE 8611600 U**

(43) Veröffentlichungstag der Anmeldung:
**04.11.87 Patentblatt 87/45**

(84) Benannte Vertragsstaaten:
**DE ES FR IT**

(71) Anmelder: **Blaupunkt-Werke GmbH**
**Robert-Bosch-Strasse 200**
**D-3200 Hildesheim(DE)**

(72) Erfinder: **Fahlbusch, Dieter**
**Alfelder Strasse 51**
**D-3201 Diekholzen(DE)**

(74) Vertreter: **Eilers, Norbert, Dipl.-Phys.**
**Blaupunkt-Werke GmbH Robert-Bosch-Strasse 200**
**D-3200 Hildesheim(DE)**

(54) Mechanisch-elektronische Diebstahlsicherung für in Kraftfahrzeuge mit Warnanlage eingebaute Zusatzgeräte, insbesondere Autoradios, Kassettengeräte und dergleichen.

(57) Bei einer mechanisch-elektronischen Diebstahlsicherung für in Kraftfahrzeuge mit Warnanlage eingebaute Zusatzgeräte, insbesondere Autoradios, Kassettengeräte und dergleichen, ist das Zusatzgerät mittels beidseitig vorspringender und in den Einschubrahmen oder die Einbauwand einspringender Rastfedern (12b, 12c) gehalten und mit Einschuböffnungen (12, 12a, 13a, 13b) für Lösebügel für die Rastfedern (12b, 12c) versehen.

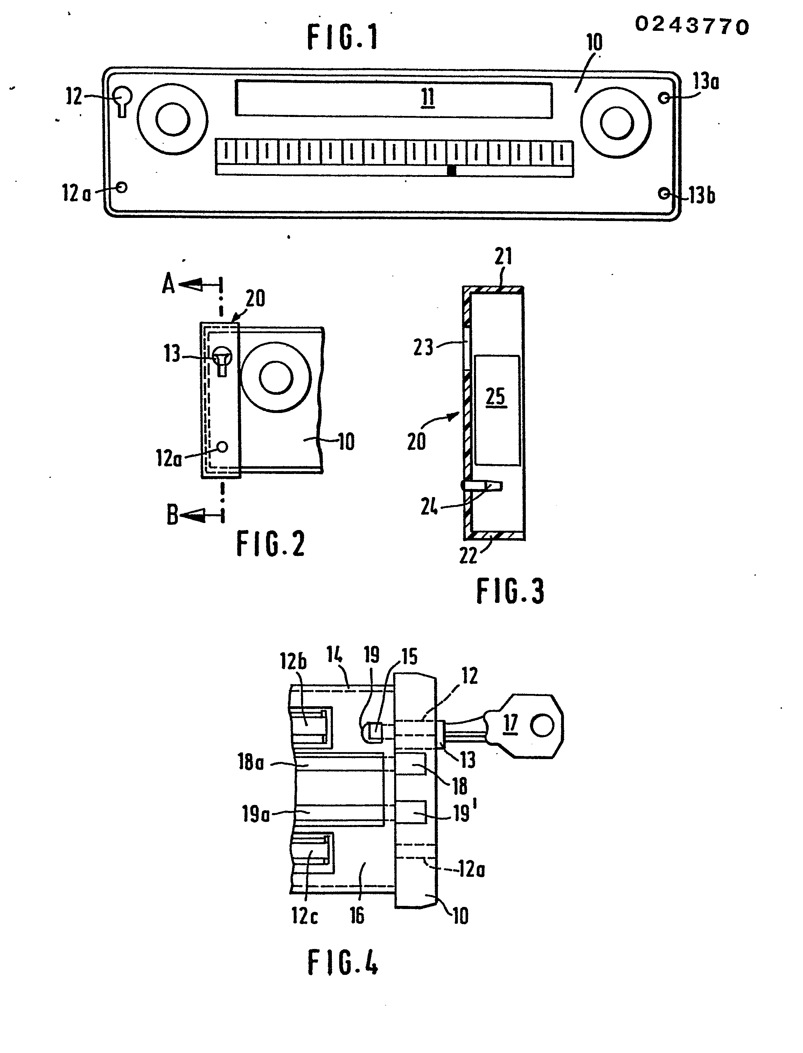

Zwecks Auslösung der Warnanlage sind Einschuböffnungen (12, 12a) für die Lösebügel mit einer abziehbaren Leiste (20) abgedeckt, die beim Abnehmen einen die Warnanlage kurzschließenden Ruhekontakt (18, 19, 25) öffnet (Figur 2).

FIG.4

EP 0 243 770 A1

Mechanisch-elektronische Diebstahlsicherung für in Kraftfahrzeuge
mit Warnanlage eingebaute Zusatzgeräte, insbesondere Autoradios,
Kassettengeräte und dergleichen

Die Neuerung betrifft eine mechanisch-elektronische Diebstahlsicherung für in Kraftfahrzeuge mit Alarmanlage eingebaute Zusatzgeräte, wie z. B. Autoradios, Kassettengeräte und dergleichen, die in einen Einschubrahmen, der in einer Einbauöffnung einer Kraftfahrzeugwand befestigt ist, von deren Vorderseite her eingeschobenen und damit oder der Kraftfahrzeugwand mechanisch lösbar verbunden sind. Dabei kann die Einbauöffnung z. B. im Armaturenbrett oder in einer besonderen Gerätekonsole vorgegeben sein.

Hochwertige Zusatzgeräte, wie z. B. Autoradios, werden häufig entwendet, sobald dem Dieb einmal die unbemerkte Öffnung des Kraftfahrzeuges gelungen ist. Gegen solchen Diebstahl hilft auch eine schwer zugängliche, mechanische Verrastung des Zusatzgeräts mit seinem Einschubrahmen nicht immer, da die Verrastung zum raschen Ausbau des Zusatzgerätes für Reparaturen mit nicht allzu kompliziertem Werkzeug lösbar sein muß, das sich ein geschickter Dieb auch selbst herstellen kann.

Man kann den unbefugten Ausbau des Zusatzgeräts in Ergänzung der bekannten Verriegelung durch die Ausbildung einer Einschuböffnung für den Lösebügel als Schließloch und Einsatz eines Sicherheitsschlosses erschweren, das nur mit einem Sicherheitsschlüssel zu öffnen und damit aus der Einschuböffnung herausziehbar ist, worauf die Einschuböffnung erst für die Einführung des Lösebügels zugängig wird.

Die Neuerung hat die Aufgabe, diese zusätzliche mechanische Sicherung mit einer elektronischen Sicherung so zu verknüpfen, daß bereits beim Versuch, sich Zugang zum Schlüsselloch zu verschaffen, die elektronische Sicherung anspricht und die Warnanlage des

...

Kraftfahrzeugs, sei es die Warnblinkleuchten oder die Hupe, in Tätigkeit setzt und den Dieb davon abhält, sich weiter am Ausbau des Zusatzgeräts zu versuchen.

Die Neuerung löst diese Aufgabe durch die im Kennzeichen des Anspruchs 1 angegebenen technischen Merkmale. Weitere Merkmale der Neuerung sind in den Unteransprüchen genannt.

Die Leiste kann auffallend gefärbt sein, so daß sie nicht nur für den Fahrzeugbesitzer leicht auffindbar ist, sondern auch Dieben als wahrscheinliches und zunächst zu entfernendes Sicherungselement auffällt. Überraschend wird dann, bevor ein Unbefugter noch mit selbst gebasteltem Lösewerkzeug manipulieren kann, bereits beim Abziehen der Leiste der Alarm ausgelöst und der Unbefugte verjagt.

Sollte die Manipulation dann bis zur Stillsetzung der Warnanlage nicht abgebrochen sein, dann kann der Dieb immer noch nicht mit der Lösung der Verrastung beginnen, weil ihm der passende Sicherheitsschlüssel zur Herauslösung des Sicherheits-Zylinderschlosses fehlt, nach dessen Entfernung die Einschuböffnungen für die Lösebügel erst zugängig werden. In der Regel wird der Dieb dadurch so nervös, daß er jeden weiteren Versuch aufgibt.

In einer Abwandlung der oben beschriebenen Lösung kann die Leiste auch eine einfache, flache und elektrisch leitende Brücke sein und das Sicherheits-Zylinderschloß den einen und eine in die andere Einschuböffnung eingesetzte Metallbuchse den anderen Teil des Ruhekontaktes bilden. Diese Lösung eignet sich besonders für Zusatzgeräte, deren Frontplatte nur eine geringe Tiefe hat und keine Winkelleiste zuläßt. Außerdem wird bei dieser Form der Kurzschluß des Ruhekontaktes z. B. durch ein seitlich eingeschobenes Messer sehr erschwert.

...

Die Zeichnung bringt ein Ausführungsbeispiel für die Neuerung mit Winkelleiste bei einem Autoradio. Dabei zeigen:

Fig. 1:   die Frontplatte des Zusatzgeräts mit den Bedienungsknöpfen und den Einschuböffnungen für die Lösebügel, wovon eine als Schließloch ausgebildet ist, verkleinert;

Fig. 2:   das Winkelstück mit Schließloch und Steckstift und Kontaktbrücke;

Fig. 3:   einen Schnitt durch das Winkelstück in natürlicher Größe nach der Linie A - A der Fig. 2 und

Fig. 4:   eine Seitenansicht eines Teils des Zusatzgeräts im Einschubrahmen mit den Rastfedern, dem Ruhekontakt und dem Schließbart in natürlicher Größe.

In Fig. 1 hat die Frontplatte 10 des Autoradios mit der Einschuböffnung 11 für eine Wechselkassette und den Bedienungsknöpfen mit Skala rechts und links davon zwei übereinanderliegende Einschuböffnungen 12, 12a und 13, 13b für die Lösebügel zum Lösen der Rastfedern 12b, 12c (Fig. 4). Davon ist die linke, obere Einschuböffnung 12 als Schlüsselloch zur Aufnahme eines Sicherheits-Zylinderschlosses 13 ausgebildet. Dieses Sicherheits-Zylinderschloß 13 sperrt das Schlüsselloch gegen das Einschieben des linken Lösebügels und verriegelt mit seinem in die Schließe 19 des Einschubrahmens 14 greifenden Schließbart 15 das Zusatzgerät 16 zusätzlich im Einschubrahmen 14 neben den bekannten, ebenfalls in den Einschubrahmen 14 greifenden Rastfedern 12b, 12c, die erst durch das Einschieben des nicht dargestellten bekannten Lösebügels in die Einschuböffnungen 12, 12a zurückgedrückt werden können. Das Sicherheits-Zylinderschloß 13 wird mit dem Sicherheitsschlüssel 17 geöffnet oder geschlossen. Im offenen Zustand ist das Sicherheitsschloß 13 aus der Einschuböff-

0243770

nung 12 mittels des Sicherheitsschlüssels 17 herausziehbar, so daß die Einschuböffnung für den Lösebügel zugängig wird.

Laut Fig. 4 sind seitlich der Frontplatte 10 des Zusatzgeräts 16 die beiden Kontakte 18, 19 für den Ruhekontakt der Warnanlage angebracht, die mit den beiden isolierten Leiterbahnen 18a, 19a mit der Warnanlage verbunden sind. Diese Leiterbahnen 18a, 19a können auf die Rückwand des Zusatzgeräts 16 geführt und dort mit Kontaktanschlüssen der Warnanlage kuppelbar sein.

Die linken Einschuböffnungen 12, 12a sind laut Fig. 2 durch ein Kunststoff-Winkelstück 20 abgedeckt, das mit seinen Flanschen 21, 22 auf der Frontplatte 10 festklemmbar ist und ein auf das Schlüsselloch der Frontplatte 10 passendes Schließloch 23 trägt. Zusätzlich trägt das Winkelstück 20 einen in die Einschuböffnung 12a passenden Steckstift 24. Eine Metallplatte oder metallisierte Fläche 25 überbrückt nach dem Aufstecken die beiden Kontakte 18, 19 und schließt sie kurz.

Wird das auffallend gefärbte Winkelstück 20 zur Freimachung der Einschuböffnungen 12, 12a abgezogen, dann wird der Kontakt zwischen den Kontaktstücken 18, 19 unterbrochen, wodurch eine im Stand-by-Betrieb befindliche Warnanlage sofort anspricht. Der Berechtigte wird dagegen im Fall des Abhebens des Winkelstücks 20 die Warnanlage zuvor abschalten.

Selbstverständlich kann man ebensogut eine der rechten Einschuböffnungen 13, 13b anstelle der linken Einschuböffnung 12, 12a als Schließloch ausbilden oder zwei Schlüssellöcher vorsehen, um unbefugten Ausbau weiter zu verschweren.

## Ansprüche

1. Mechanisch-elektronische Diebstahlsicherung für in Kraftfahrzeuge mit Warnanlage eingebaute Zusatzgeräte, insbesondere Autoradios, Kassettengeräte und dergleichen, wobei das Zusatzgerät mittels beidseitig vorspringender und in den Einschubrahmen oder die Einbauwand einspringender Rastfedern (12b, 12c) gehalten ist und Einschuböffnungen (12, 12a, 13a, 13b) für Lösebügel für die Rastfedern aufweist,
gekennzeichnet durch
eine abziehbare Leiste (Winkelstück 20), die beim Abnehmen einen die Warnanlage kurzschließenden Ruhekontakt (18, 19, 25) öffnet.

2. Diebstahlsicherung nach Anspruch 1,
dadurch gekennzeichnet,
daß die Leiste ein Winkelstück (20) ist, das einerseits mit seiner Schlüsselloch-Öffnung (23) auf einem Sicherheits-Zylinderschloß (13) aufsitzt und andererseits mit einem Stift (24) in die andere Einschuböffnung (12a) eingesteckt ist und eine elektrisch leitende und die Kontaktfedern (18, 19) der elektronischen Warnanlage überbrückende Fläche (25) trägt.

3. Diebstahlsicherung nach Anspruch 1,
dadurch gekennzeichnet,
daß die überbrückende Leiste je einen in die Schließloch-Öffnung und einen in die andere Einschuböffnung mit Paßsitz greifenden Stift (24) trägt, Leiste und Stift elektrisch leitend sind und das Sicherheits-Zylinderschloß und die andere Einschuböffnung die Anschlußkontakte der Warnanlage sind.

4. Diebstahlsicherung nach den Ansprüchen 1 bis 3,
dadurch gekennzeichnet,
daß die Endkontakte (18, 19) des Ruhekontaktes durch isolierte, längs der Seite des Zusatzgeräts auf dessen Rückseite geführte Leiterbahnen (18a, 19a) mit Endkontakten auf der Rückseite des Zusatzgeräts (16) verbunden sind, die beim Einschieben des Zusatzgeräts in den Einschubrahmen (14) den Kontakt mit der Warnanlage herstellen.

0243770

FIG.1

FIG.2

FIG.3

FIG.4

**Europäisches Patentamt**

## EUROPÄISCHER RECHERCHENBERICHT

Nummer der Anmeldung

EP 87 10 5442

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | DE-U-8 435 067 (BLAUPUNKT)<br><br>----- | | B 60 R 11/02<br><br><br><br><br><br><br><br><br><br>RECHERCHIERTE SACHGEBIETE (Int. Cl.4)<br><br>B 60 R 11/00 |

Der vorliegende Recherchenbericht wurde für alle Patentansprüche erstellt.

| Recherchenort | Abschlußdatum der Recherche | Prüfer |
|---|---|---|
| BERLIN | 14-07-1987 | STANDRING M A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82